Europäisches Patentamt

European Patent Office

Office européen des brevets

(11) Publication number: **0 092 601**
A1

## EUROPEAN PATENT APPLICATION

(21) Application number: 82109499.2

(22) Date of filing: 14.10.82

(51) Int. Cl.³: **C 23 C 17/00**
**C 23 C 3/00**

(30) Priority: 28.04.82 JP 71997/82

(43) Date of publication of application:
02.11.83 Bulletin 83/44

(84) Designated Contracting States:
DE FR GB NL

(71) Applicant: OKUNO CHEMICAL INDUSTRY CO., LTD
23, Doshomachi 3-chome
Higashi-ku Osaka-shi(JP)

(72) Inventor: Konaga, Nobuyuki
1-7-3-850, Shinmori
Asahi-ku Osaka-shi(JP)

(72) Inventor: Wada, Masatoshi
1198-2, Kamimatsu-cho
Kishiwada-shi Osaka-fu(JP)

(72) Inventor: Moritsu, Yukikazu
14-26, Takaginishimachi
Nishinomiya-shi Hyogo-ken(JP)

(72) Inventor: Yamada, Koji
9-13, Kokubuhigashijyo-cho
Kashiwara-shi Osaka-fu(JP)

(74) Representative: Riebling, Günter, Dr. Ing. et al,
Rennerle 10 Postfach 3160
D-8990 Lindau(DE)

(54) Compositions for undercoats.

(57) A composition comprising:
(a) about 0.01 to about 25% by weight of at least one catalyst component selected from the group of powders of palladium and palladium compounds soluble in an organic solvent or having a particle size of up to about 0.5 µm, and
(b) about 75 to about 99.99% by weight of an organic solvent or organic vehicle for dissolving or dispersing the catalyst component.

The composition is useful as an undercoat material in forming an electroconductive metal coating over ceramic substrate by chemical plating method.

# COMPOSITIONS FOR UNDERCOATS

This invention relates to compositions for undercoats and particularly to compositions useful as undercoat materials in forming electroconductive metal coatings over ceramic substrates by chemical plating process.

Ceramics inherently have no sensitivity to chemical plating composition. Therefore, it is necessary to activate the surface of a ceramic article by forming a catalyst layer thereon before forming an electroconductive metallic coating over the article by chemical process. Examples of conventional activating processes are: (1) a process in which the surface of a ceramic article is sensitized by being immersed in an aqueous hydrochloric acid solution containing stannous salt and is activated by an aqueous solution of palladium chloride; (2) a process in which a composition comprising a vitreous powder and a catalytic metal compound such as palladium chloride is applied to the surface of a ceramic article and the ceramic article is baked; and (3) a process in which a composition containing no solvent and comprising a thermosetting resin or ultraviolet-setting resin and a catalytic metal compound such as palladium chloride is applied to the surface of a ceramic article and cured. However, the ceramic article activated with the process (1) requires the masking of the portion to be uncoated before subjected to chemical deposition. The processes (2) and (3) form a glass or resin layer which is to be interposed between the substrate surface and the conductive metallic coating to be produced by the subsequent chemical deposition. This means that the use of glass or resin results in a limitation on the range of baking temperatures or curing temperatures in activation of the substrate surface, consequently leading to formation of a metallic coating with low adhesion to the ceramic substrate.

An object of this invention is to provide a composition for undercoats which is capable of activating the desired surface portion of a ceramic article so that an electroconductive metallic coating can be formed on this portion alone by chemical plating process.

Another object of the invention is to provide a composition for undercoats which can be baked or cured at suitable temperatures in such wide range for activation when applied to the substrate surface that an electroconductive metallic layer formed by chemical deposition has an improved adhesion to the substrate.

A further object of the invention is to provide a composition for undercoats which is able to activate the surface of a ceramic substrate in a simple manner.

Other objects and features of this invention will become more apparent from the following description.

This invention provides a composition for use as undercoat materials in forming electroconductive metallic coatings over ceramic articles by chemical deposition, the composition comprising:

(a) about 0.01 to about 25% by weight of at least one catalyst component selected from the group of powders of palladium and palladium compounds soluble in an organic solvent or having a particle size of up to about 0.5 μm, and

(b) about 75 to about 99.99% by weight of an organic solvent or organic vehicle for dissolving or dispersing the catalyst component.

We conducted research to develop undercoat compositions which can accomplish the foregoing objects. In the course of the research we made experiments in which a ceramic substrate was coated with a composition comprising a commercial metal palladium powder about 0.8 μm in particle size as used in conventional processes and an organic vehicle, and then was baked and a electroconductive plating was formed thereon by

- 4 -

chemical deposition. However, the plating formed was found to have low bond to the substrate and to be easily separated, hence unfit for practical use. In further experiments, we discovered that when a finely divided metal palladium is used as an undercoat, a conductive plating can be formed thereon with a satisfactorily high adhesion to the substrate. Our investigation also revealed that similar results can be obtained by using a palladium compound dissolved in an organic solvent in place of the fine metal palladium powder. The present invention was accomplished based on these novel findings.

With this invention, it is important that the palladium or palladium compound useful as the catalyst component is soluble in an organic solvent or up to about 0.5 μm in particle size. Examples of useful palladium and palladium compounds are palladium black, palladium sponge and like metal palladium powders; palladium acetate, palladium propionate, palladium butyrate, palladium valerate, palladium caprate, palladium laurate, palladium myristate, palladium palmitate, palladium stearate, palladium oleate, palladium linoleate, palladium oxalate, palladium malonate, palladium succinate, palladium glutarate, palladium adipate, palladium pimelate, palladium suberate, palladium azelate, palladium sebacate, and like organic acid salts of palladium ; coordination palladium compounds or palladium complexes having, as ligand, ammonia, monoethylamine, diethylamine, triethylamine, monopropylamine, dipropylamine, tripropylamine, monobutylamine, dibutylamine, tributylamine, bipyridine, aniline, para-nitrosodimethyl aniline, diethylenetriamine, triethylenetetramine, dimethylglyoxime, ethylenediamine, acetylacetone, etc.; palladium chloride, palladium nitrate, palladium oxide and like inorganic palladium compounds, etc. The metal palladium and the majority of the inorganic palladium compounds are usually insoluble or sparingly soluble in an organic solvent and are used as finely divised particles up to about 0.5 μm in this invention. Fine particles of insoluble palladium and palladium compounds may be formed by any suitable conventional process, for example, by a process in which palladium chloride is dissolved in an aqueous solution of hydrochloric acid, the solution is rendered weakly alkaline by adding sodium hydroxide to precipitate palladium hydroxide and formaldehyde in the form of an aqueous solution is added to reduce the hydroxide, whereby fine particles are precipitated from the solvent solution. The organic acid salts, complexes and some of inorganic palladium compounds such as palladium acetate, palladium propionate, palladium stearate, palladium oxalate, palladium malonate and diethylenetriamine complex, dimethylglyoxime complex and p-nitrosodimethylaniline complex of palladium chloride are usually soluble in an organic solvent, and therefore commercially available powders of these compounds with a grater particle size are usable in this invention. These palladium and palladium compounds are used singly or in mixture with each other. They are employed in an amount of about 0.01 to about 25% by weight of the composition. When used in an amount of less than about 0.01% by weight, they give a reduced sensitivity to plating, thereby causing the metal to deposit in an insufficient amount in chemical plating. In excess of about 25% by weight, they increase production costs and also impair the adhesion between the substrate and the deposited metal. The fine powder of metal palladium and palladium compounds insoluble in an organic solvent is preferably used in an amount as small as about 0.01 to about 6% by weight of the composition, whereas the palladium compound soluble in an organic solvent is favorably employed in a relatively larger amount, i.e. in an amount of about 0.1 to about 25% by weight of the composition.

Usable as the other component for the present composition, namely organic solvent or organic vehicle, are any suitable materials which are able to dissolve or disperse the catalytic metal and which include a variety of those usually used in preparation of printing inks or coating compositions. Exemplary of useful organic solvents are: terpenes such as pine oil, terpineol, terpentine oil, etc.; esters such as ethyl acetate, butyl acetate, amyl acetate, ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, etc.; ethers such as diethyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, etc.; ketones such as acetone, acetylacetone, methyl ethyl ketone, methyl isobutyl ketone, etc.; alkyl halides such as dichloromethane, trichloroethane, trichloroethylene, etc.; aromatic hydrocarbons such as toluene, xylene, etc. These organic solvents may be used singly or in mixture with each other if required. Organic vehicles comprise at least one of organic solvents as indicated above and at least one of synthetic and natural resins. Examples of synthetic resins are homopolymers and copolymers comprising at least one of methyl methacrylate and butyl methacrylate and like acrylates; ethyl cellulose, nitrocellulose, and like cellulose derivatives; polyamides, polyesters, polyvinyl alcohol, polyvinyl acetate, polyvinyl acetal, polyvinyl pyrrolidone, polyvinyl butyral or like resins. Examples of natural resins are balsam, copal, rosin, etc. The organic vehicle preferably contains the monomer and/or resin in an amount of about 5 to about 25% by weight. The organic solvent or organic vehicle is incorporated in the present composition in an amount of about 75 to about 99.99% by weight.

The composition of this invention is easily prepared in the form of a liquid merely by mixing together the catalyst component and organic solvent or vehicle component.

The ceramic articles to which the present composition is applicable are not particularly limited as far as they have minute-sized dents or indentation over the surface. Such ceramics include sintered bodies of oxides, nitrides, carbides, borides or the like usually used and articles of crystalline glass available under the trade marks "Pyroceram", "Devitron", etc. Ordinary amorphous glass is not suitable. Examples of useful ceramic articles in sintered form are alumina, mullite, zirconia, beryllia, forsterite, steatite, ferrite and like oxide type ceramics; barium titanate, lead zirconic acid titanate and like dielectric ceramics; boron nitride, silicon nitride, silicon carbide, titanium boride and the like; and cermets consisting of ceramic and metal, etc.

The composition of this invention can be applied to ceramic article by known methods such as those of screen printing, brushing method, application by a spinner, immersion method, etc. When the present composition is applied by screen printing, the desired design or pattern can be printed on a given surface portion of the substrate such that a plating can be distinctly formed only on the printed desin or pattern area by chemical or electroless plating. The amount of the present composition to be coated on the substrate is not particularly limited as far as it is in the range in which the metal can be deposited in the subsequent chemical plating in a satisfactory manner. The amount of the composition can be suitably determined depending on the kind and amount of the components, application method, etc. Usually the present composition is used in an amount of about 0.2 to about 1 mg caluculated as the metal palladium per 100 $cm^2$ of the ceramic substrate surface. After the application, the ceramic article having the composition coated thereon is heated whereby the organic solvent is removed by vaporization, the resin contained in the organic vehicle is eliminated on decomposition, and, in certain cases, the catalytic metal component is decomposed and/or oxidized. The heating temperature is preferably at least about 150°C although variable with the kind of a palladium salt of organic acid or complex contained in the composition. The upper limit of the heating temperature is determined such that the ceramic articles is not deformed or damaged by heating. The catalyst layer formed from the composition of this invention is not deteriorated in sensitivity to chemical plating and in adhesion to the substrate even when heated or baked at a temperature of as high as about 1100°C. Usually the composition need not be heated to such high temperature, with the preferred heating temperature ranging from about 200 to about 600°C.

On the undercoat formed by heating or baking the ceramic article and the applied composition, a metallic layer is easily produced in the usual manner by immersing the article in a conventional chemical or electroless plating bath. Useful plating baths include those conventionally used such as an acidic or alkaline electroless nickel plating bath containing sodium hypophosphite as a reducing agent, an electroless nickel or copper plating bath containing, for example, sodium boron hydride as a boron-type reducing agent, an electroless copper plating bath containing formaldehyde as a reducing agent, etc.

When the composition of this invention is used as stated above, a conductive metallic coating can be easily formed on the ceramic substrate, with the desired design or pattern and with uniform thickness. The bond strength between the substrate and the metal plating layer according to this invention is extremely high as compared with the strength obtained by use of conventional undercoat compositions. The metallic coating is substantially directly adhered to the substrate with only a very thin and discontinuous layer of palladium oxide or metal palladium remaining between the substrate and the metallic coating. The composition of this invention can be applied in a very simple manner with increased operating efficiency. Further the baking temperature is not particularly limited. With use of the present composition, deposition of a plating metal on a desired portion of the substrate, production of resistors, electronic circuits and electrodes for condensers, etc., can be easily conducted within a short period of time. Further according to the invention, metal coating can be uniformly formed with distinct patterns or outlines.

It remains to be clarified why the present composition can achieve the remarkable results as described above, particularly the marked sensitization and formation of metal coatings with improved adhesion to the substrate. The reasons may be presumed as follows. Ceramics generally have dents or indentations minute in size over the surface so that the present composition when applied thereto can penetrate into minute-sized dents by capillary action. When the present composition thus deposited is heated, the organic vehicle or organic solvent contained in the composition is evaporated off and the palladium compound therein is decomposed or oxidized, leaving metal palladium or palladium oxide which is sensitive to chemical plating. The metal palladium or palladium oxide remains or deposits in minute-sized dents over the substrate surface to sensitize the surface to a considerable extent.

In the subsequent chemical deposition a metal layer is formed on the sensitized portion of the surface with a remarkable adhesion by the effect generally known as "anchor effect". The application of the present composition forms no glass layer or resin layer between the substrate and the metal plating layer but merely produces a very thin, discontinuous layer of palladium oxide or metal palladium therebetween, as described above.

Accoring to this invention, the following great advantages are derived from the absence of the glass or resin layer.

1)      The composition of this invention eliminates the likelihood that the resistance to solvent and chemical substance and heat resistance of the article may be reduced by the presence of glass or resin layer used as the binder in the conventional composition and interposed between the substrate and the metallic layer.

2)      If a condenser is produced by application of the conventional composition, the glass or resin layer tends to adversely affect its capacity, dielectric loss, etc.  However, the ceramic articles treated with the composition according to this invention are free from this tendency.

3)      With this invention, there is no possibility that the sensitivity to chemical plating will be reduced by the migration of the catalytic metal into the glass or resin layer.  Therefore substantially the whole amount of the catalytic metal used is effectively utilized for chemical plating.  The full use of the catalytic metal minimizes the amount of the metal required, thereby contributing to the decrease of production costs.

The undercoat composition of this invention can produce outstanding results due to the unique

- 14 -

composition which are quite unexpected from conventional compositions. Thus the composition of this invention are extremely advantageous in actual use.

This invention is described below in greater detail with reference to examples and comparison examples.

## Example 1

0.1 part by weight of palladium black powder 0.003 to 0.1 μm in particle size was thoroughly mixed with 99.9 parts by weight of a solvent for printing ink (organic vehicle comprising 5% by weight of nitrocellulose and 95% by weight of terpineol) to prepare the composition of this invention in the form of a paste.

An alumina ceramic article (50 mm x 50 mm x 0.8 mm) was printed with the paste by screen printing using a 300-mesh screen to give a coating about 5 μm thick. The article was dried at 100°C for 15 minutes and baked in an electric furnace at 350°C for 10 minutes. The baked article thus obtained was immersed in a nickel plating bath (trade mark: "Topnicolon # 50", product of Okuno Chemical Industry Co., Ltd., Japan) at 90°C for 15 minutes to provide a plating thereon. A copper wire (0.65 mm in diameter) as the lead was soldered to the plating. The wire was pulled in the direction vertical to the plated article to measure the bond strength of the nickel plating. The bond strength of the plating was 1.9 $kg/mm^2$.

- 15 -

### Example 2

1 part by weight of palladium acetate was thoroughly mixed with 99 parts by weight of the same solvent for printing ink as used in Example 1 to obtain the pasty composition of this invention.

A steatite article (30 mm x 40 mm x 1 mm) was printed with the paste in the same manner as in Example 1 to form a coating 5 µm thick. The article was dried in air to vaporize the solvent and baked in an electric furnace at 400°C for 2 minutes. A nickel plating was chemically formed on the article in same manner as in Example 1. A copper wire 0.65 mm in diameter was soldered to the plating and pulled vertically relative to the plated surface of the article to measure the the bond strength of the plating. The bond strength was 2.3 $kg/mm^2$.

### Example 3

The same procedure as in Example 2 was repeated except that the article was baked at 1,000°C for 1 minute. The bond strength of the plating was 2.1 $kg/mm^2$.

### Example 4

A liquid composition of this invention was prepared by thoroughly mixing 0.1 part by weight of palladium propionate with 99.9 parts by weight of butyl-carbitol acetate.

The liquid was applied by brushing to a dielectric ceramic article (15 mm in diameter and 0.5 mm in thickness) substantially consisting of barium titanate. The article was baked at 180°C for 40 minutes. The baked article was dipped in a copper plating bath (trade mark: "OPC Copper-S", product of Okuno Chemical Industry Co., Ltd., Japan) at 50°C for 20 minutes to give a plating. The bond strength of the copper plating was 2.0 $kg/mm^2$ as measured in the same manner as in Example 1.

Example 5

A pasty composition of this invention was prepared by thoroughly mixing 0.5 part by weight of palladium complex comprising 1 mole of palladium chloride and 1 mole of diethylenetriamine with 99.5 parts by weight of a solvent for printing ink comprising 15% by weight of ethyl cellulose and 85% by weight of butyl-carbitol acetate.

A ferrite article (12 mm in diameter and 1 mm in thickness) was printed with the paste by the same screen printing method as in Example 1. The article was dried and baked. A nickel plating was chemically formed on the article to which a lead was soldered to measure the bond strength of the plating. The strength was 2.0 $kg/mm^2$.

- 17 -

## Example 6

3 part by weight of dimethylglyoxime complex of palladium and 97 parts by weight of terpineol were thoroughly mixed together to prepare the liquid composition of this invention.

The liquid was applied by brushing to an alumina article (50 mm x 50 mm x 0.8 mm). The article was dried to vaporize the solvent and baked at 800°C for 1 minute. A copper plating was formed on the article in the same manner as in Example 4. The bond strength of the plating was 2.2 $kg/mm^2$.

## Comparison Example 1

40 parts by weight of palladium stearate was thoroughly mixed with 60 parts by weight of the same solvent for printing ink as used in Example 1 to obtain a pasty composition. The paste was applied to an alumina article in the same manner as in Example 1. After the article was dried and baked a nickel plating was formed on the article in the same manner as in Example 1. The bond strength of the plating was less than 0.1 $kg/mm^2$.

## Comparison Example 2

The procedure of Example 1 was repeated with the exception of using palladium black powder 0.8 μm in particle size to prepare the pasty composition of this invention. Printing, drying, baking, plating and

- 18 -

soldering of a lead were carried out in the same manner as in Example 1. The bond strength of the nickel plating was less than 0.3 kg/mm$^2$.

### Example 7

Four alumina articles with nickel platings formed in the same manner as in Example 1 were maintained at 200, 400, 600 and 800°C, respectively for 1 hour. The bond strengths of the platings measured before and after the heat treatment were found to be all within the range from 1.8 to 2.0 kg/mm$^2$ without showing any deterioration.

### Example 8

The procedure of Example 1 was repeated to prepare six alumina articles with nickel platings. The articles were immersed in a 10% aqueous solution of hydrochloric acid, a 5% aqueous solution of sodium hydroxide, toluene, ethyl alcohol, methylene chloride and ethylene glycol ethyl ether, respectively, at room temperature for 24 hours. No difference was found in bond strength before and after the immersion.

### Example 9

A paste of the present composition was prepared by thoroughly mixing 2 parts by weight of palladium acetate and 98 parts by weight of solvent for screen printing ink (organic vehicle comprising 15 parts by weight of ethyl cellulose, 2 parts by weight of rosin and 83 parts by weight of butylcarbitol acetate). A $BaTiO_3$ type dielectric article (9 mm in diameter and 0.5 mm in thickness) was printed with the paste by screen printing using a 300-mesh screen. The article was dried at 100°C for 15 minutes and baked in an electric furnace at 500°C for 10 minutes. The baked article was immersed in a nickel plating bath (trade mark: "NIKLAD 740", product of ALLIED KELITE, U.S.A.) at 70°C for 15 minutes to give a nickel plating. The bond strength of the plating was 2.1 kg/mm$^2$. The dielectric ceramic article was found to have electrical characteristics; a capacity of 1526 pF and dielectric loss (tan $\delta$) of 1.8%.

When a silver paste was deposited on the same ceramics and baked, the electrical characteristics were 1520 pF in capacity and 1.9% in dielectric loss (tan $\delta$). This means that the pasty composition of this invention enables the use of Ni-plating as a substituent for plated silver electrodes with a great reduction in material cost.

CLAIMS:

1. A composition for use as undercoat materials in forming electroconductive metallic coatings over ceramic substrates by chemical deposition, the composition comprising:

(a) about 0.01 to about 25% by weight of at least one catalyst component selected from the group of powders of palladium and palladium compounds soluble in an organic solvent or having a particle size of up to about 0.5 μm, and

(b) about 75 to about 99.99% by weight of an organic solvent or organic vehicle for dissolving or dispersing the catalyst component.

2. A composition as defined in claim 1 wherein the catalyst component is at least one of metal palladium powders, organic acid salts of palladium, coordination palladium compounds and inorganic palladium compounds.

3. A composition as defined in claim 2 wherein the catalyst component is at least one of palladium black, palladium sponge; palladium acetate, palladium propionate, palladium butyrate, palladium valerate, palladium caprate, palladium laurate, palladium myristate, palladium palmitate, palladium stearate, palladium oleate, palladium linoleate, palladium oxalate, palladium malonate, palladium succinate, palladium glutarate, palladium adipate, palladium pimelate, palladium suberate, palladium azelate, palladium sebacate; palladium complexes having, as ligand, ammonia, monoethylamine, diethylamine, triethylamine, monopropylamine, dipropylamine, tripropylamine, monobutylamine, dibutylamine, tributylamine, bipyridine, aniline, paranitrosodimethyl aniline, diethylenetriamine, triethylenetetramine, dimethylglyoxime, ethylenediamine, acetylacetone; and palladium chloride, palladium nitrate and palladium oxide.

4. A composition as defined in claim 1 wherein the organic solvent is at least one of terpenes, esters, ethers, ketones, alkyl halides and aromatic hydrocarbons.

5. A composition as defined in claim 4 wherein the organic solvent is at least one of terpineol, terpentine oil; ethyl acetate, butyl acetate, amyl acetate, ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate; diethyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether; acetone, acetylacetone, methyl ethyl ketone, methyl isobutyl ketone; dichloromethane, trichloroethane, trichloroethylene; toluene and xylene.

6. A composition as defined in claim 1 wherein the organic vehicle comprises at least one of terpenes, esters, ethers, ketones alkyl halides and aromatic hydrocarbons and at least one of homopolymers and copolymers comprising at least one of acrylates; cellulose derivatives; polyamides, polyesters, polyvinyl alcohol, polyvinyl acetate, polyvinyl acetal, polyvinyl pyrrolidone, polyvinyl butyral, balsam, copal and rosin.

7. A process for forming electroconductive metallic coating over a ceramic substrate, the process comprising the steps of applying to the substrate a composition consisting of:

(a) about 0.01 to about 25% by weight of at least one catalyst component selected from powders of palladium and palladium compounds soluble in an organic solvent or having a particle size of up to 0.5 μm, and

(b) about 75 to about 99.99% by weight of an organic solvent or organic vehicle for dissolving or dispersing the catalyst component,

heating the substrate at 150 to 1100°C and immersing the same in a plating bath.

8. A process as defined in claim 7 wherein the catalyst component is at least one of metal palladium powders, organic acid salts of palladium, coordination palladium compounds and inorganic palladium compounds.

9. A process as defined in claim 8 wherein the catalyst component is at least one of palladium black, palladium sponge; palladium acetate, palladium propionate, palladium butyrate, palladium valerate, palladium caprate, palladium laurate, palladium myristate, palladium palmitate, palladium stearate, palladium oleate, palladium linoleate, palladium oxalate, palladium malonate, palladium succinate, palladium glutarate, palladium adipate, palladium pimelate, palladium suberate, palladium azelate, palladium sebacate, palladium complexes having, as ligand, ammonia, monoethylamine, diethylamine, triethylamine, monopropylamine, dipropylamine, tripropylamine, monobutylamine, dibutylamine, tributylamine, bipyridine, aniline, para-nitrosodimethyl aniline, diethylenetriamine, triethylenetetramine, dimethylglyoxine, ethylenediamine, acetylacetone; and palladium chloride, palladium nitrate and palladium oxide.

10. A process as defined in claim 7 wherein the organic solvent is at least one of terpenes, esters, ethers, ketones, alkyl halides and aromatic hydrocarbons.

11. A process as defined in claim 10 wherein the organic solvent is at least one of terpineol, terpentine oil; ethyl acetate, butyl acetate, amyl acetate, ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate; diethyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether; acetone, acetylacetone, methyl ethyl ketone, methyl isobutyl ketone; dichloromethane, trichloroethane, trichloroethylene; toluene and xylene.

12. A process as defined in claim 7 wherein the organic vehicle comprises at least one of terpenes, esters, ethers, ketones, alkyl halides and aromatic hydrocarbons and at least one of homopolymers and copolymers comprising at least one of acrylates; cellulose derivatives; polyamides, polyesters, polyvinyl alcohol, polyvinyl acetate, polyvinyl acetal, polyvinyl pyrrolidone, polyvinyl butyral, balsam, copal and rosin.

13. A process as defined in claim 7 wherein the substrate is heated at a temperature of about 200 to about 600°C.

14. A ceramic substrate having an electroconductive metallic coating produced by the process of claim 7.

European Patent Office

# EUROPEAN SEARCH REPORT

| | DOCUMENTS CONSIDERED TO BE RELEVANT | | EP 82109499.2 |
|---|---|---|---|

| Category | Citation of document with indication, where appropriate of relevant passages | Relevant to claim | CLASSIFICATION OF THE APPLICATION (Int. Cl. 3) |
|---|---|---|---|
| Y | <u>DE - A1 - 3 025 307</u> (BAYER AG) <br> * Claims; page 7, lines 19-24 * <br> -- | 7-12 | C 23 C 17/00 <br> C 23 C 3/00 |
| Y | <u>DE - A1 - 2 451 217</u> (BASF AG) <br> * Page 2, line 5 - page 4, line 3; examples; claims * <br> -- | 7-12 | |
| X | <u>AT - B - 314 306</u> (PHOTOCIRCUITS DIVISION OF KOLLMORGEN CORPORATION) <br> * Claims * <br> -- | 1-3 | |
| X | <u>CH - A - 587 878</u> (SCHERING AKTIEN-GESELLSCHAFT) <br> * Column 1, line 40 - column 4, line 50; examples 1-3; claims * <br> -- | 1-3 | |
| X | <u>US - A - 3 937 857</u> (C.R. BRUMMETT et al.) <br> * Claims; example 1 * <br> ---- | 7-12, 13,14 | **TECHNICAL FIELDS SEARCHED (Int. Cl. 3)** <br> C 23 C |

| | | |
|---|---|---|
| The present search report has been drawn up for all claims | | |
| Place of search <br> VIENNA | Date of completion of the search <br> 04-07-1983 | Examiner <br> SLAMA |